# EUROPEAN PATENT SPECIFICATION

(11) **EP 4 057 140 B1**
(45) Date of publication and mention of the grant of the patent: **09.09.2026**
(21) Application number: 20901585.8
(22) Date of filing: 11.12.2020
(51) Int. Cl.: G06F 9/48, G06F 9/54

(54) **PROCESS MANAGEMENT METHOD AND APPARATUS, ELECTRONIC DEVICE**
PROZESSVERWALTUNGSVERFAHREN UND VORRICHTUNG, ELEKTRONISCHES GERÄT
PROCÉDÉ ET APPAREIL DE GESTION DE PROCESSUS, ET DISPOSITIF ÉLECTRONIQUE

(30) Priority: 17.12.2019 CN 201911302697
(43) Date of publication of application: 14.09.2022
(73) Proprietor: Huawei Technologies Co., Ltd., Shenzhen, Guangdong 518129 (CN)
(72) Inventor: HUANG, Wen, Shenzhen, Guangdong 518129 (CN); ZHAO, Jing, Shenzhen, Guangdong 518129 (CN)
(74) Representative: Isarpatent
(86) International application number: PCT/CN2020/135760
(87) International publication number: WO 2021/121161

(56) References cited:
- WO-A1-2019/128509
- WO-A1-2019/128586
- CN-A- 102 902 583
- CN-A- 102 999 384
- CN-A- 109 032 814
- CN-A- 109 445 917
- US-A1- 2013 067 495
- US-A1- 2013 347 002

## Description

### TECHNICAL FIELD

This application relates to the field of computer technologies, and in particular, to a process management method and an electronic device.

### BACKGROUND

Inter-process communication (inter-process communication, IPC) is a communication mode in which information is propagated or exchanged between different processes. An inter-process call is usually performed between different IPC-based applications. Currently, when another process calls a process in a suspended (hibernated) state, the process in the suspended state may be directly woken up. When the process is frequently woken up, memory and power consumption resources are frequently consumed.

WO 2019/128586 A1 discloses an application processing method, comprising: if a message to be processed is detected in an electronic device, obtaining the message type and the message priority of the message to be processed; according to the message type and the message priority, obtaining a target application from a background application in a frozen state; and awakening the target application.

US 2013/067495 A1 discloses one or more techniques and/or systems for suspending logically related processes associated with an application, determining whether to resume a suspended process based upon one or more wake policies, and/or managing an application state of an application, such as timer and/or system message data.

### SUMMARY

An objective of this application is to resolve a conventional-technology problem that a process in a suspended state is directly woken up when being called and memory and power consumption resources are consumed because the process is frequently woken up. This application provides a process management method and an electronic device, as defined in the appended set of claims, so that a quantity of wake-up times of a process in a suspended state can be effectively reduced, to reduce consumption of memory and power consumption resources.

In the Binder inter-process call, for the to-be-called process in the suspended state, when the to-be-called process is called by a calling process, whether the to-be-called process needs to be woken up may be determined according to the preset wake-up policy that is based on the communication type of the Binder inter-process call. In other words, for Binder inter-process calls with different communication types, when the to-be-called process needs to be woken up, the to-be-called process is woken up for the process calling. When the to-be-called process does not need to be woken up, the to-be-called process may not be woken up. In this way, a quantity of wake-up times of the process can be effectively reduced. To be specific, a quantity of times that the calling process wakes up the to-be-called process based on the Binder inter-process call can be effectively reduced, to avoid a problem that memory and power consumption resources are consumed because the process is frequently woken up. In other words, memory occupation and the consumption of the power consumption resources can be effectively reduced.

In the Binder inter-process call, different process wake-up management methods are separately performed for the two communication types: the synchronous Binder call and the asynchronous Binder call. In this way, targeted process wake-up management can be performed for the Binder inter-process calls with different communication types. In addition, calling requirements of the different communication types on the to-be-called process can be met.

The ease-of-use precedence is that use convenience of a process is preferably considered. If the precedence type of the Binder inter-process call is the ease-of-use precedence, the to-be-called process is woken up for the process calling. In this way, a requirement for using the to-be-called process can be ensured.

The power consumption precedence is that a process occupying as little power consumption as possible is preferably considered. When it is determined that the precedence type of the Binder inter-process call is the power consumption precedence, in consideration of normal use of a related function based on the Binder inter-process call, whether the calling process is a core process may be determined, to determine whether to wake up the to-be-called process. If the calling process is a core process, to ensure the normal use of the related function based on the Binder inter-process call, the to-be-called process is woken up for the process calling. If the calling process is a non-core process, even if the to-be-called process is not woken up, user experience is not affected. Therefore, the to-be-called process may not be woken up.

If the calling process is a non-core process, even if the Binder inter-process call is not performed, current user experience is not affected. When the to-be-called process is not woken up, the status of the calling process may further be marked as the suspended state, and/or the status of the application corresponding to the calling process is marked as the suspended state, to further reduce the consumption of the memory and power consumption resources.

For the Binder inter-process call whose communication type is the asynchronous Binder call, to avoid that the process is frequently woken up, the call for the to-be-called process may be temporarily buffered. The to-be-called process is woken up when a specific wake-up condition is met. Further, when the to-be-called process is woken up, the buffered Binder inter-process call may be performed.

The management process list is preset. Process identification information of a process in a suspended state is added to the management process list. When it is determined whether the to-be-called process is a suspended process, it only needs to be determined whether the process identification information of the to-be-called process is in the management process list. In this way, whether the to-be-called process is a suspended process can be conveniently determined.

For the application that has no the perceivable service within the preset time period after entering the background, to avoid the application continuing to occupy memory and generate power consumption, a status of the application may be switched to a suspended state, and a status of a process corresponding to the application may be switched to a suspended state. In this way, consumption of the memory and power consumption resources can be avoided.

### BRIEF DESCRIPTION OF DRAWINGS

To describe the technical solutions in the embodiments of this application more clearly, the following briefly describes the accompanying drawings for describing the embodiments.
FIG. 1 is a conceptual diagram of an IPC mechanism according to some embodiments of this application;
FIG. 2 is a diagram of a scenario of a Binder inter-process call according to some embodiments of this application;
FIG. 3 is a flowchart of a process management method in a Binder inter-process call according to some embodiments of this application;
FIG. 4 is a flowchart of a method for determining, according to a wake-up policy of a communication type of a Binder inter-process call, whether to wake up a to-be-called process according to some embodiments of this application;
FIG. 5 is a schematic diagram of a buffering status of a Binder inter-process call in an asynchronous call buffer according to some embodiments of this application;
FIG. 6 is a flowchart of an application and process management method according to some embodiments of this application;
FIG. 7 is a schematic diagram of modules of a process management apparatus according to some embodiments of this application;
FIG. 8 is a flowchart of a process management method in a Binder inter-process call according to some embodiments of this application;
FIG. 9 is a schematic diagram of a structure of an electronic device according to some embodiments of this application; and
FIG. 10 is a schematic diagram of a structure of a system-on-a-chip (SOC) according to some embodiments of this application.

### DESCRIPTION OF EMBODIMENTS

The following describes implementations of this application by using specific embodiments. A person skilled in the art may readily understand other advantages and functions of this application from the content disclosed in this specification. Although the descriptions of this application are described with reference to the example embodiments, this does not mean that features of this application are limited only to the implementations. On the contrary, this application is described with reference to the implementations to cover other options or modifications that may be derived based on the claims of this application. To provide an in-depth understanding of this application, the following description includes many specific details. This application may alternatively be implemented without using these details. In addition, to avoid confusion or blurring the focus of this application, some specific details will be omitted from the description. It should be noted that the embodiments in this application and the features in the embodiments may be mutually combined in the case of no conflict.

It should be noted that, in this specification, similar numerals and letters indicate similar items in the following figures. Therefore, once an item is defined in one figure, it is not necessary to further define and explain the item in the following figures.

To make the objectives, technical solutions, and advantages of this application clearer, the following further describes the implementations of this application in detail with reference to the accompanying drawings.

A plurality of applications (Applications) are usually installed on an electronic device. Each application usually corresponds to one or more processes. The processes usually have independent system resources and are isolated from each other. To enable different processes to access resources mutually and coordinate with each other, inter-process communication is needed.

The electronic device may be specifically a terminal device such as a mobile phone, a tablet computer, a personal digital assistant (Personal Digital Assistant, PDA), or a desktop computer.

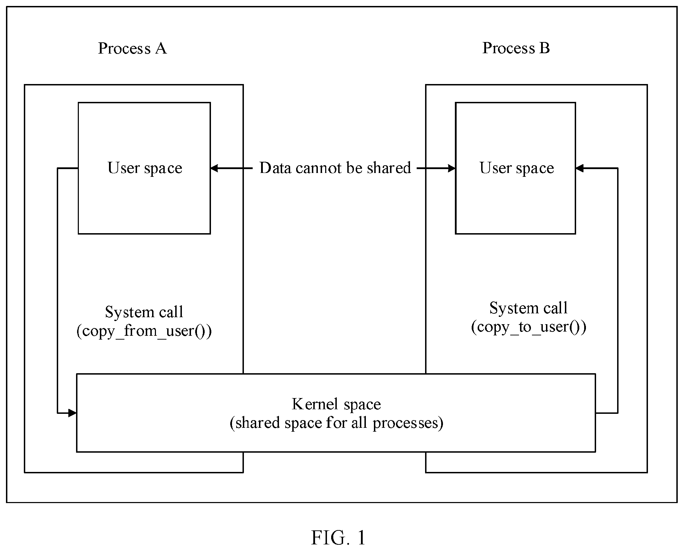

FIG. 1 is a conceptual diagram of a mechanism for inter-process communication. A process A and a process B each have independent user spaces. The user spaces of the processes are independent of each other, and information cannot be directly shared between the user spaces. A kernel space is a shared space for all processes, and the processes may propagate or exchange information between user spaces of each other by using the kernel space. For example, information in the user space of the process A may be copied to the user space of the process B by using the kernel space through a system call.

Further, two applications that use the inter-process communication may usually be classified as a client and a server. A client process requests data, and a server process responds to a data request of the client process.

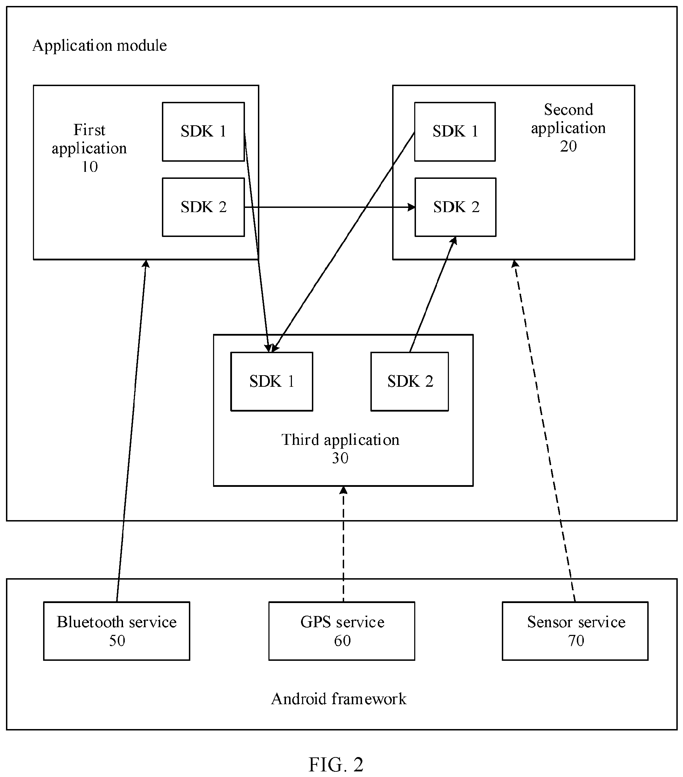

Specifically, FIG. 2 shows a scenario in which inter-process communication is performed between applications. In this scenario, an application module and an Android framework (Android Framework) module are included. The application module includes a first application 10, a second application 20, and a third application 30. The first application 10, the second application 20, and the third application 30 each are integrated by using an SDK (Software Development Kit, software development kit), and specifically, are integrated into an SDK 1 and an SDK 2. The SDKs communicate with each other through inter-process communication. In addition, the Android framework includes modules such as a Bluetooth service 40, a GPS service 50, and a sensor service 60. The modules such as the Bluetooth service 40, the GPS service 50, and the sensor service 60 may specifically communicate with the first application 10, the second application 20, and the third application 30 through inter-process communication.

For the SDK 1, a process of the third application 30 may be selected as a server, and the first application 10 and the second application 20 may be selected as clients. For the SDK 2, a process of the second application 20 may be selected as a server, and the first application 10 and the third application 30 may be selected as clients. The first application 10, the second application 20, and the third application 30 are kept alive with each other. One application dies (or is in a suspended state), and another application starts up (or wakes up) the dead application. Specifically, startup between the applications enables a process in a suspended state in the application to be woken up. If the process is woken up many times, memory and power consumption resources are consumed.

Further, that the SDKs communicate with each other through inter-process communication, and the modules such as the Bluetooth service, the GPS service, and the sensor service may specifically communicate with the first application 10, the second application 20, and the third application 30 through inter-process communication may be specifically performing communication by using a Binder inter-process communication mechanism. Specifically, in an Android system, each application includes four components: an activity, a service, a broadcast, and a provider. A bottom layer of inter-process communication related to the four components depends on the Binder inter-process communication mechanism.

It should be noted that a communication type of a Binder inter-process call includes a synchronous Binder call and an asynchronous Binder call. In the synchronous Binder call, a calling process calls a to-be-called process, and the call can be ended only after the to-be-called process returns a result. The asynchronous Binder call is that a calling process calls a to-be-called process without waiting for the to-be-called process to return a result, and the call is similar to a notification mechanism.

Further, in FIG. 2, a solid line with an arrow indicates the synchronous Binder call, and a dashed line with an arrow indicates the asynchronous Binder call.

In this way, process wake-up occurs in a Binder inter-process call that is based on the Binder inter-process communication mechanism and that is between processes corresponding to the applications. If the process is woken up many times, the memory and power consumption resources are consumed.

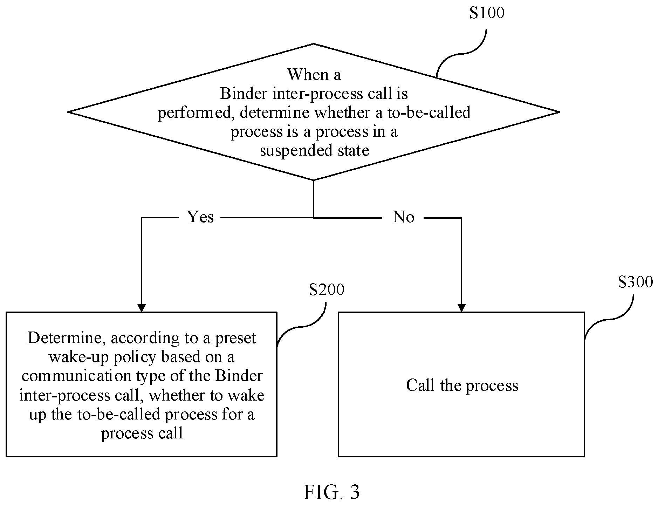

Based on the foregoing technical problem, an implementation of this application discloses a process management method. FIG. 3 shows a process management method. The process management method specifically includes the following steps:
S100: When a Binder inter-process call is performed, determine whether a to-be-called process is a process in a suspended state; and if the to-be-called process is a process in a suspended state, perform S200; or if the to-be-called process is a process in a non-suspended state, perform S300.
S200: Determine, according to a preset wake-up policy that is based on a communication type of the Binder inter-process call, whether to wake up the to-be-called process for process calling.
S300: Call the process.

Specifically, in the Binder inter-process call, a calling process and the to-be-called process are usually included. The calling process is an initiator (caller) of the Binder inter-process call. The to-be-called process is a process (callee) that is called by the calling process in the Binder inter-process call. In the process management method provided in this application, in the Binder inter-process call, for the to-be-called process in the suspended state, when the to-be-called process is called, whether the process needs to be woken up is determined according to the preset wake-up policy that is based on the communication type of the Binder inter-process call. In other words, for Binder inter-process calls with different communication types, when the to-be-called process needs to be woken up, the to-be-called process is woken up for the process calling. When the to-be-called process does not need to be woken up, the to-be-called process may not be woken up. In this way, a quantity of wake-up times of the to-be-called process can be effectively reduced. To be specific, a quantity of times that the calling process wakes up the to-be-called process based on the Binder inter-process call can be effectively reduced, to avoid a problem that the memory and power consumption resources are consumed because the process is frequently woken up. In this way, the consumption of the memory and power consumption resources can be effectively reduced.

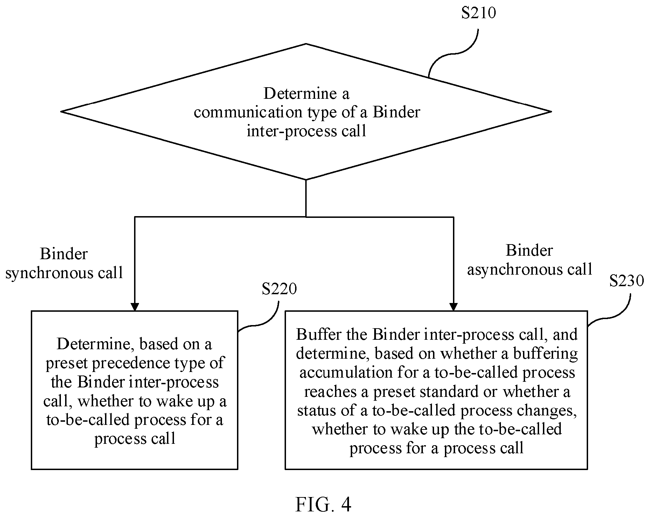

For example, referring to FIG. 4, determining, according to the wake-up policy that is based on the communication type of the Binder inter-process call, whether to wake up the to-be-called process specifically includes the following steps:
S210: Determine the communication type of the Binder inter-process call.

Specifically, the communication type of the Binder inter-process call includes a synchronous Binder call and an asynchronous Binder call. If the communication type of the Binder inter-process call is the synchronous Binder call, S220 is performed. If the communication type of the Binder inter-process call is the asynchronous Binder call, S230 is performed.

S220: Determine, based on a preset precedence type of the Binder inter-process call, whether to wake up the to-be-called process for the process calling.

S230: Buffer the Binder inter-process call, and determine, based on whether an accumulation of buffered calls for the to-be-called process reaches a preset accumulation standard or whether a status of the to-be-called process changes, whether to wake up the to-be-called process for the process calling.

Specifically, the communication type of the Binder inter-process call includes the synchronous Binder call and the asynchronous Binder call. In the synchronous Binder call, a calling process calls the to-be-called process, and the call can be ended only after the to-be-called process returns a result. The asynchronous Binder call is that a calling process calls the to-be-called process without waiting for the to-be-called process to return a result, and the call is similar to a notification mechanism. In this application, different wake-up policies are set based on different communication types of the Binder inter-process calls. For the synchronous Binder call, whether to wake up the to-be-called process for the process calling is determined based on the preset precedence type of the Binder inter-process call. For the asynchronous Binder call, the Binder inter-process call is buffered, and whether to wake up the to-be-called process for the process calling is determined based on whether the accumulation of the buffered calls for the to-be-called process reaches the preset accumulation standard or whether the status of the to-be-called process changes. In this way, different process wake-up policies may be formulated for the Binder inter-process calls with different communication types, and a quantity of wake-up times of the process can be effectively reduced when requirements of the Binder inter-process calls with different communication types are met.

For example, in an implementation of this application, the precedence type includes ease-of-use precedence, and if the precedence type of the Binder inter-process call is the ease-of-use precedence, the to-be-called process is woken up for the process calling. Specifically, the ease-of-use precedence is that use convenience of a process is preferably considered. If the precedence type of the Binder inter-process call is the ease-of-use precedence, the to-be-called process is woken up for the process calling. In this way, a requirement for using the to-be-called process can be ensured.

For example, in a possible implementation of this application, the precedence type of the Binder inter-process call is the ease-of-use precedence if any one of the following conditions is met: an application corresponding to the to-be-called process or a calling process that calls the to-be-called process is an application that is allowed to run in a background, as selected in a user interface; an application corresponding to the to-be-called process or a calling process that calls the to-be-called process is an application whose power consumption impact is ignored, as selected in a user interface; or an application corresponding to the to-be-called process or a calling process that calls the to-be-called process is an application whose memory impact is ignored, as selected in a user interface.

Specifically, in a Binder inter-process call, if an application corresponding to at least one of the calling process and the to-be-called process is an application that is allowed to run in the background, it is considered that a precedence type of the current Binder inter-process call is the ease-of-use precedence. The to-be-called process needs to be woken up for the process calling.

Similarly, in a Binder inter-process call, if an application corresponding to at least one of the calling process and the to-be-called process is an application whose power consumption impact is ignored, as selected in a user interface, or an application whose memory impact is ignored, as selected in a user interface, it is considered that a precedence type of the current Binder inter-process call is the ease-of-use precedence. The to-be-called process needs to be woken up for the process calling.

Specifically, the foregoing application in which the power consumption impact is ignored may be specifically an application whose battery optimization is ignored in an Android system.

It should be noted that, in the Binder inter-process call, a user may set an application through a user interface. For example, for some frequently used applications or an application important to the user, the user may select the application as the application that is allowed to run in the background/in which the power consumption impact is ignored/in which the memory impact is ignored. In this case, when it is determined that the application corresponding to at least one of the calling process and the to-be-called process is the application that is allowed to run in the background/in which the power consumption impact is ignored/in which the memory impact is ignored, for convenience of the user, it may be determined that a type of the current Binder inter-process call is the ease-of-use precedence, and the to-be-called process is woken up for the process calling.

For example, in an implementation of this application, the precedence type includes power consumption precedence, and if the precedence type of the Binder inter-process call is the power consumption precedence, whether a calling process that calls the to-be-called process is a core process is determined. If the calling process is a core process, the to-be-called process is woken up. If the calling process is a non-core process, the to-be-called process is not woken up.

Specifically, the power consumption precedence is that a process occupying as little power consumption as possible is preferably considered. When it is determined that the precedence type of the Binder inter-process call is the power consumption precedence, in consideration of normal use of a related function based on the Binder inter-process call, whether the calling process is a core process may be determined, to determine whether to wake up the to-be-called process. If the calling process is a core process, to ensure the normal use of the related function based on the Binder inter-process call, the to-be-called process is woken up for the process calling. If the calling process is a non-core process, the to-be-called process is not woken up. Use experience is not affected. Therefore, the to-be-called process may not be woken up.

It should be noted that, in this application, the precedence types of the Binder inter-process call may include only the foregoing two types: the ease-of-use precedence and the power consumption precedence. When the precedence type of the Binder inter-process call is determined, only whether the precedence type is an ease-of-use precedence type may be determined. If no, it is considered that the precedence type is a power consumption precedence type. Alternatively, only whether the precedence type is a power consumption precedence type may be determined. If no, it is considered that the precedence type is an ease-of-use precedence type. Certainly, it may also be separately determined whether the precedence type of the Binder inter-process call is ease-of-use precedence type or the power consumption precedence type. This may be specifically selected and set based on a requirement.

For example, in an implementation of this application, the calling process is a core process if the calling process meets any one of the following conditions.

An application corresponding to the calling process is an application configured by using application whitelisting. Specifically, whether the calling process is a core process may be determined by determining whether the application corresponding to the calling process is an application configured by using application whitelisting (Application Whitelisting) in an operating system. If the application corresponding to the calling process is an application configured by using the application white listing in the system, it is considered that the calling process is a core process.

The calling process is a foreground process, and is being used by a user in a foreground. Specifically, whether the calling process is a core process may be determined by determining whether the calling process is the foreground process that is being used by the user in the foreground. If the calling process is the foreground process that is being used by the user in the foreground, it is considered that the calling process is a core process.

An ADJ value of the calling process in the operating system is less than an ADJ value of a foreground process. Specifically, the ADJ value of the calling process in the operating system may be compared with the ADJ value of the foreground process. If the ADJ value of the calling process is less than the ADJ value of the foreground process, it is considered that the calling process is a core process.

The calling process in the operating system is a process that is not in a background process scheduling group (SCHED_GROUP_BACKGROUND). Specifically, a process in the background process scheduling group is a non-core process. Whether the calling process is a core process may be determined by determining whether the calling process is in the background process scheduling group. If the calling process is in the background process scheduling group, it is considered that the calling process is a non-core process. If the calling process is not in the background process scheduling group, the calling process is a core process.

A UID of the application corresponding to the calling process is less than a preset UID. Specifically, the preset UID may be a first application allocation UID (FIRST_APPLICATION_UID) in the operating system. Specifically, if the operating system is the Android system, the FIRST_APPLICATION_UID is 10000. Certainly, a specific value of the preset UID may be specifically selected and set based on a requirement.

The calling process is a process of a foreground service in the operating system. Specifically, whether the calling process is a core process may be determined by determining whether the calling process is the process of the foreground service in the operating system. If the calling process is the process of the foreground service in the operating system, it is considered that the calling process is a core process.

The calling process is a process that currently performs a perceivable background service. Specifically, whether the calling process is a core process may be determined by determining whether the calling process is the process that currently performs the perceivable background service. If the calling process is the process that currently performs the perceivable background service, it is considered that the calling process is a core process. The process that currently performs the perceivable background service generally includes processes corresponding to a music playing application, a recording application, a downloading application, a navigation application, and the like.

It should be noted that determining whether the calling process is a core process may be specifically determining whether the calling process meets any one of the foregoing items. If any one of the foregoing items is met, it is considered that the calling process is a core process. If the calling process does not meet any one of the foregoing items, it is considered that the calling process is a non-core process.

The foregoing operating system may be specifically an Android OS, an iOS, or another type of operating system.

Further, another condition used to determine whether the calling process is a core process may alternatively be set based on a requirement.

For example, in an implementation of this application, if the calling process is a core process, the to-be-called process is woken up for the process calling. If the calling process is a non-core process, the to-be-called process is not woken up. The method further includes: marking a status of the calling process as a suspended state, and/or marking a status of the application corresponding to the calling process as a suspended state.

Specifically, in this application, if the calling process is a non-core process, current user experience is not affected even if the Binder inter-process call is not performed. To reduce memory and/or power consumption, when the to-be-called process is not woken up, the status of the calling process that calls the to-be-called process may be marked as the suspended state, and the status of the application corresponding to the calling process is marked as the suspended state. Alternatively, only the status of the calling process may be marked as the suspended state. Alternatively, only the status of the application corresponding to the calling process is marked as the suspended state. This may be specifically selected and set based on a requirement.

Further, for the Binder inter-process call whose communication type is the asynchronous Binder call, to avoid that the process is frequently woken up, the call for the to-be-called process may be temporarily buffered. The to-be-called process is woken up when a specific wake-up condition is met. Further, when the to-be-called process is woken up, the buffered Binder inter-process call may be performed.

For example, in an implementation of this application, if the communication type of the Binder inter-process call is the asynchronous Binder call, the Binder inter-process call is buffered. That the Binder inter-process call is buffered includes: buffering a calling relationship for the to-be-called process into an asynchronous call buffer. Specifically, the asynchronous call buffer is usually disposed in an electronic device. Buffering the Binder inter-process call for the asynchronous Binder call manner may specifically buffering the Binder inter-process call into the asynchronous call buffer.

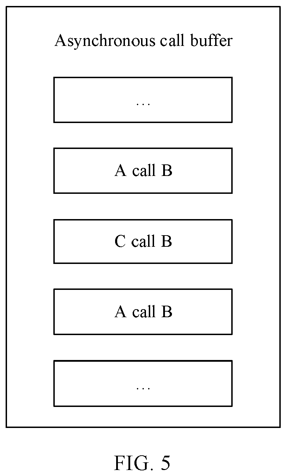

For example, a buffering status of the Binder inter-process call in the asynchronous call buffer may be specifically shown in FIG. 5. B is a to-be-called process, and both A and C are calling processes that call the to-be-called process B. Buffering a calling relationship for the to-be-called process B into the asynchronous call buffer may be specifically buffering calling relationships such as "A call B" and "C call B" in the asynchronous buffer.

Further, the asynchronous call buffer is specifically a FIFO (First-Input First-Output, first-in first-out) buffer.

It should be noted that when there is a plurality of Binder inter-process calls, performed by different calling processes on the to-be-called process, that need to be buffered, the Binder inter-process calls are sequentially buffered in the asynchronous call buffer.

For example, in an implementation of this application, if the accumulation of the buffered calls for the to-be-called process reaches the preset accumulation standard or if the status of the to-be-called process is switched from the suspended state to an active state, the to-be-called process is woken up.

For example, in an implementation of this application, that the accumulation of the buffered calls for the to-be-called process reaches the preset accumulation standard may be that a total used storage of the asynchronous call buffer for the to-be-called process exceeds a preset storage threshold. Specifically, if the total used storage of the asynchronous call buffer for the to-be-called process exceeds the preset storage threshold, it is considered that the accumulation of the buffered calls for the to-be-called process reaches the preset accumulation standard. The preset threshold may be specifically three fourths of a storage capacity of the asynchronous call buffer for the to-be-called process. Certainly, the preset threshold may be specifically set based on a requirement. More specifically, the storage capacity of the asynchronous call buffer is 512 k. The preset storage threshold may be specifically 384 k. If a current total used storage of the asynchronous call buffer is 300 k, the Binder inter-process call for the to-be-called process may continue to be buffered. If a current total used storage of the asynchronous call buffer is 384 k, the Binder inter-process call for the to-be-called process cannot continue to be buffered. In this case, the to-be-called process is woken up.

In an implementation of this application, that the accumulation of the buffered calls for the to-be-called process reaches the preset accumulation standard may alternatively be that an available storage space of the asynchronous call buffer for the to-be-called process is less than a preset storage space threshold. Specifically, if the available storage space of the asynchronous call buffer for the to-be-called process is less than the preset storage space threshold, it is considered that the accumulation of the buffered calls for the to-be-called process reaches the preset accumulation standard. The preset storage space threshold may be specifically one fourth of the storage capacity of the asynchronous call buffer for the to-be-called process. Certainly, the preset storage space threshold may be specifically set based on a requirement. More specifically, the storage capacity of the asynchronous call buffer is 512 k. The preset storage space threshold may be specifically 128 k. If a current available storage space of the asynchronous call buffer is 200 k, the Binder inter-process call for the to-be-called process may continue to be buffered. If a current available storage space of the asynchronous call buffer is 128 k, the Binder inter-process call for the to-be-called process cannot continue to be buffered. In this case, the to-be-called process is woken up.

In an implementation of this application, that the accumulation of the buffered calls for the to-be-called process reaches the preset accumulation standard may alternatively be that a quantity of buffered calling times for the to-be-called process reaches a preset threshold for a quantity of buffered calling times. Specifically, the preset threshold for a quantity of buffered calling times may be specifically 100. When the quantity of buffered calling times for the to-be-called process reaches 100, it is considered that the accumulation of the buffered calls for the to-be-called process reaches the preset accumulation standard. In this case, the to-be-called process is woken up. Further, the woken-up to-be-called process may be used for the process calling. It should be noted that the preset threshold for a quantity of buffered calling times may be 100, or may alternatively be another value set based on a requirement.

In an implementation of this application, that the accumulation of the buffered calls for the to-be-called process reaches the preset accumulation standard may alternatively be that buffered calling time for the to-be-called process reaches a preset buffered calling time threshold. Specifically, the preset buffered calling time threshold may be 30 min. When the buffered calling time for the to-be-called process reaches 30 min, it is considered that the accumulation of the buffered calls for the to-be-called process reaches the preset accumulation standard. In this case, the to-be-called process is woken up. Further, the woken-up to-be-called process may be used for the process calling. It should be noted that the preset buffered calling time threshold may be 30 min. Certainly, the preset buffered calling time threshold may alternatively be another value set based on a requirement.

For example, in an implementation of this application, after the to-be-called process is woken up, the method further includes: switching a status of the to-be-called process from the suspended state to an active state, and switching a status of an application corresponding to the to-be-called process from a suspended state to an active state. Specifically, after the to-be-called process is woken up, the status of the to-be-called process is switched from the suspended state to the active state, and the status of the application corresponding to the to-be-called process is switched from the suspended state to the active state, so that the to-be-called process may be used for the process calling.

Specifically, for the Binder inter-process call buffered in the asynchronous call buffer, when the foregoing wake-up condition for the to-be-called process is met, buffering for the to-be-called process further needs to be deleted from a buffered Binder inter-process call list in the asynchronous call buffer.

For example, in an implementation of this application, determining whether the to-be-called process is a process in a suspended state includes: determining whether process identification information of the to-be-called process is in a preset management process list. The management process list includes process identification information of a process corresponding to an application in a suspended state. If the process identification information of the to-be-called process is in the management process list, the to-be-called process is a process in a suspended state. If the process identification information of the to-be-called process is not in the management process list, the to-be-called process is a process in a non-suspended state.

Specifically, the management process list may be preset, and the process identification information of the process in the suspended state is added to the management process list. In other words, the management process list includes the process identification information of the process in the suspended state. When it is determined whether the to-be-called process is a process in a suspended state, whether a process identifier of the to-be-called process is in the management process list is determined, so that whether the to-be-called process is a process in a suspended state can be conveniently determined.

For example, in an implementation of this application, the process identification information may include only a process ID, for example, "process A-ID", "process B-ID", or "process C-ID". Alternatively, the process identification information may alternatively include only a UID of an application, in a suspended state, that corresponds to a process in a suspended state, for example, "application 1-UID", "application 2-UID", or "application 3-UID". Alternatively, the process identification information may include both a process ID and a UID of an application corresponding to a process, for example, "application 1-UID + process A-ID", "application 2-UID + process B-ID", "application 3-UID + process C-ID & process D-ID", or "application 4-UID + process C-ID & process A-ID & process E-ID". The process identification information may be specifically selected and set based on a requirement.

For example, in an implementation of this application, the application in the suspended state includes an application that has no perceivable service within a preset time period after entering the background. For the application that has no the perceivable service within the preset time period after entering the background, to avoid the application continuing to occupy memory and generate power consumption, a status of the application may be switched to a suspended state, and a status of a process corresponding to the application may be switched to a suspended state. In this way, consumption of the memory and power consumption resources can be avoided. Certainly, the application in the suspended state may be specifically another application in a suspended state, for example, an application that is not activated in a system.

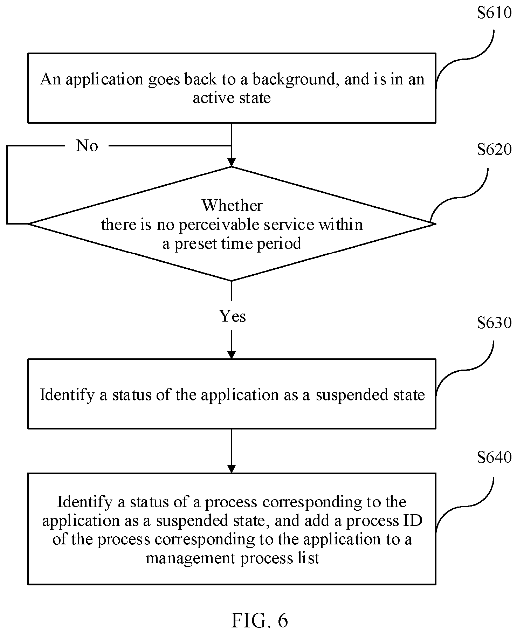

Specifically, referring to FIG. 6, managing a status of an application and a status of a process in this application specifically includes the following steps:
S610: The application goes back to the background, and is in an active state.
S620: Determine whether there is no perceivable service within a preset time period; and if no, perform step S630; or if yes, continue to perform step S620.
S630: Mark the status of the application as a suspended state, and perform step S640.
S640: Mark a status of a process corresponding to the application as a suspended state, and add a process ID of the process corresponding to the application to the management process list.

Specifically, after going back to the background, the application first enters the active state. It is detected whether the application has no perceivable service within a preset time period T. If it is detected that the application has no perceivable service within the preset time period T, the status of the application is marked as the suspended state. The process ID of the process corresponding to the application is added to a preset management process list after the application process is in the suspended state.

It should be noted that the preset time period may be specifically set based on a requirement, for example, may be specifically 5 min and 10 min.

Further, the managing a status of an application and a status of a process in this application includes: determining whether the status of the process or the application in the suspended state is switched to the active state, and if the status of the process in the suspended state is switched to the active state, removing process identification information of the process from the management process list; and/or after the status of the application in the suspended state is switched to the active state, remove process identification information of the process corresponding to the application from the management process list.

Specifically, after the status of the process in the suspended state is switched to the active state, to ensure normal calling of the process, the process identification information of the process may be removed from the management process list. Alternatively, after the status of the application in the suspended state is switch to the active state, to ensure normal calling of the process corresponding to the application, the process identification information of the process corresponding to the application may be removed from the management process list. In this way, the status of the process and/or the application may be managed in real time, to increase user convenience.

Further, for the foregoing process that is in the suspended state after entering the background, if the application is started in the foreground, the status of the application is marked as the active state, and the status of the process corresponding to the application is marked as the active state. Alternatively, when a Binder call is performed on the process, the process is switched to the active state.

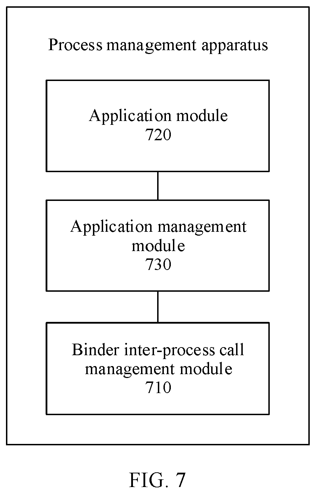

FIG. 7 is a schematic diagram of modules of a process management apparatus according to this application.

In an implementation of this application, the process management apparatus includes a Binder inter-process call management module 710. The Binder inter-process call management module 710 is configured to: when a Binder inter-process call is performed, determine whether a to-be-called process in the Binder inter-process call is a process that enters a background and that is in a suspended state; and when determining that the to-be-called process is a process in a suspended state, determine, according to a preset wake-up policy that is based on a communication type of the Binder inter-process call, whether to wake up the to-be-called process for process calling; or when determining that the to-be-called process is a process in a non-suspended state, call the process. In other words, the Binder inter-process call management module 710 may be configured to perform the process management method corresponding to steps S100 to S300.

In another implementation of this application, the process management apparatus further includes an application module 720 and an application management module 730. The application management module 730 is configured to manage a status of an application in the application module 720 and a status of a process corresponding to the application. Specifically, the application management module 730 is configured to: determine whether an application, in the application module 720, that enters the background has no perceivable service within a preset time period; and if no, mark a status of the application as a suspended state; or if yes, mark a status of the application as an active state. For the application marked as being in the suspended state, the application management module 730 is further configured to: mark a status of a process corresponding to the application as a suspended state, and indicate the Binder inter-process call management module 710 to add process identification information of the process to a preset management process list in the Binder inter-process call management module 710.

In an implementation of this application, the application management module 730 is further configured to: after the to-be-called process is woken up, indicate the Binder inter-process call management module 710 to delete process identification information of the to-be-called process from the management process list.

In an implementation of this application, the application management module 730 is further configured to: after the to-be-called process is woken up, switch a status of the to-be-called process from the suspended state to an active state, and/or switch a status of an application corresponding to the to-be-called process from a suspended state to an active state.

In an implementation of this application, the application management module 730 is further configured to: when a status of a calling process that calls the to-be-called process is marked as a suspended state, mark a status of an application corresponding to the calling process as a suspended state.

Further, the process management apparatus provided in this application may further include a Binder driver module. The Binder driver module is a core module for implementing the Binder inter-process call, and is configured to perform related Binder inter-process call processing such as the Binder inter-process call.

It should be noted that the process management apparatus provided in this application includes the Binder inter-process call management module 710, the application module 720, and the application management module 730 that are configured to separately perform steps in the foregoing process management method. The Binder inter-process call management module 710, the application module 720, and the application management module 730 are separately configured to perform corresponding steps. Therefore, for a same part, details are not described herein again.

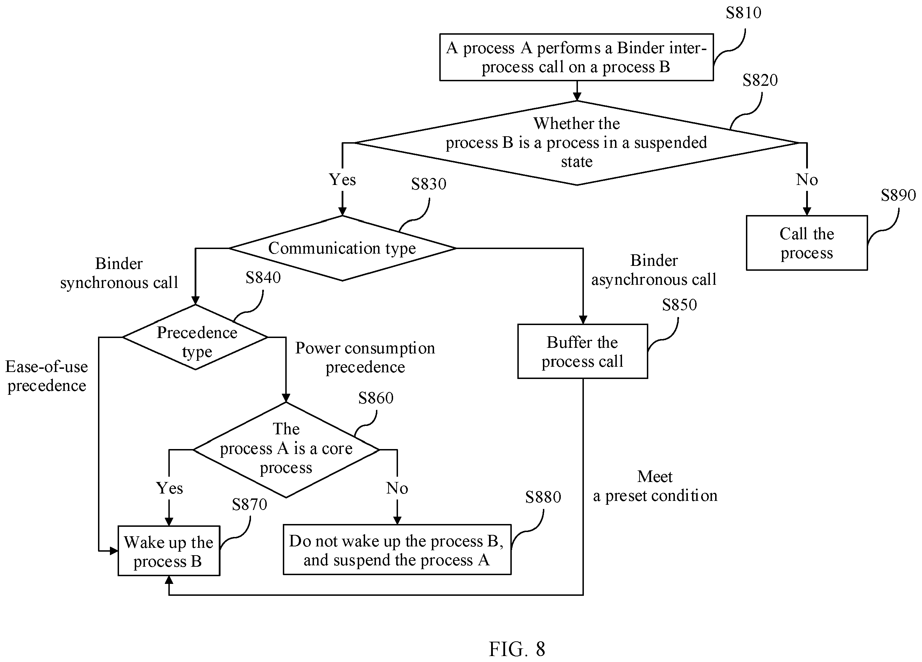

Further, FIG. 8 shows a process management method. The process management method specifically includes the following steps:
S810: A process A performs a Binder inter-process call on a process B.
S820: Determine whether the process B is a process in a suspended state; and if yes, perform step S830; or if no, perform S890.

Specifically, determining whether the process B is a process in a suspended state may be specifically performed by the Binder inter-process call management module 710 in the foregoing manner that is used to determine whether the to-be-called process is a process in a suspended state. Details are not described herein again.

S830: Determine a communication type.

Specifically, the Binder inter-process call management module 710 determines a communication type of the Binder inter-process call performed on the process B by the process A. If the communication type is a synchronous Binder call, S840 is performed. If the communication type is an asynchronous Binder call, S850 is performed.

S840: Determine a precedence type.

Specifically, if the communication type is the synchronous Binder call, the Binder inter-process call management module 710 determines a precedence type of the Binder inter-process call performed on the process B by the process A. If the precedence type is ease-of-use precedence, the Binder inter-process call management module 710 performs S870. If the precedence type is power consumption precedence, the Binder inter-process call management module 710 performs S860.

S850: Buffer the inter-process call.

Specifically, if the communication type is the asynchronous Binder call, the Binder inter-process call management module 710 buffers the Binder inter-process call performed on the process B by the process A. Buffering of the Binder inter-process call may be specifically buffering the Binder inter-process call into the asynchronous buffer shown in FIG. 5.

Further, after the Binder inter-process call performed on the process B by the process A is buffered, the method further includes: When a preset condition is met, the Binder inter-process call management module 710 performs S870, to wake up the process B. The preset condition may be specifically the foregoing condition for determining, based on whether an accumulation for the to-be-called process B reaches the preset accumulation standard or whether a status of the to-be-called process B changes, whether to wake up the to-be-called process B for process calling. Details are not described herein again.

S860: Determine whether the process A is a core process; and if yes, perform step S870; or if no, perform S880.

S870: Wake up the process B.

S880: Do not wake up the process B, and suspend the process A.

S890: Call the process.

According to the process management method provided in this implementation, in the Binder inter-process call, for the to-be-called process B, whether the process B is a process in a suspended state is first determined. If the process B is a process in a suspended state, whether to wake up the process B is determined according to a preset wake-up policy. If the process B is in a non-suspended state (an active state), the process is called. Specifically, the wake-up policy includes: Whether a communication type of a current Binder inter-process call is the synchronous Binder call or the asynchronous Binder call is first determined.

If the communication type of the current Binder inter-process call is the synchronous Binder call, a precedence type of the current Binder inter-process call is further determined, and whether to wake up the process B is determined based on the determined precedence type. Specifically, if the precedence type is the ease-of-use precedence, the process B is immediately woken up, to process the Binder inter-process call. If the precedence type is the power consumption precedence, whether the process A is a core process is further determined. If the process A is not a core process, the process B is not woken up, and the process A is suspended (hibernated), to pause the current Binder inter-process. If the process A is a core process, the process B is woken up, to process the Binder inter-process call.

If the communication type of the current Binder inter-process call is the asynchronous Binder call, the current Binder inter-process call is buffered into the asynchronous buffer for the process B, and when a preset wake-up condition is met, the process B is woken up for the process calling.

Further, after the process B is woken up, the application management module 730 switches the status of the process B from the suspended state to the active state. Further, the application management module 730 may further switch a status of an application corresponding to the process B from a suspended state to an active state.

Further, after suspending the process A, the application management module 730 switches a status of the process A from an active state to a suspended state. Further, the application management module 730 may further switch a status of an application corresponding to the process A from an active state to a suspended state.

If a plurality of Binder inter-process calls for the process B are buffered, after the process B is woken up, the process B sequentially processes all the buffered Binder inter-process calls for the B process.

According to the process management method provided in this implementation, in the Binder inter-process call, whether to wake up the to-be-called process is determined by using the foregoing specified wake-up policy that is based on the communication type of the Binder inter-process call. Compared with a conventional-technology method for directly waking up the to-be-called process for the process calling when the Binder inter-process call occurs, the method can effectively reduce a quantity of wake-up times of the process, to reduce memory occupation and consumption of a power consumption resource. In addition, the method meets a normal use requirement of a user.

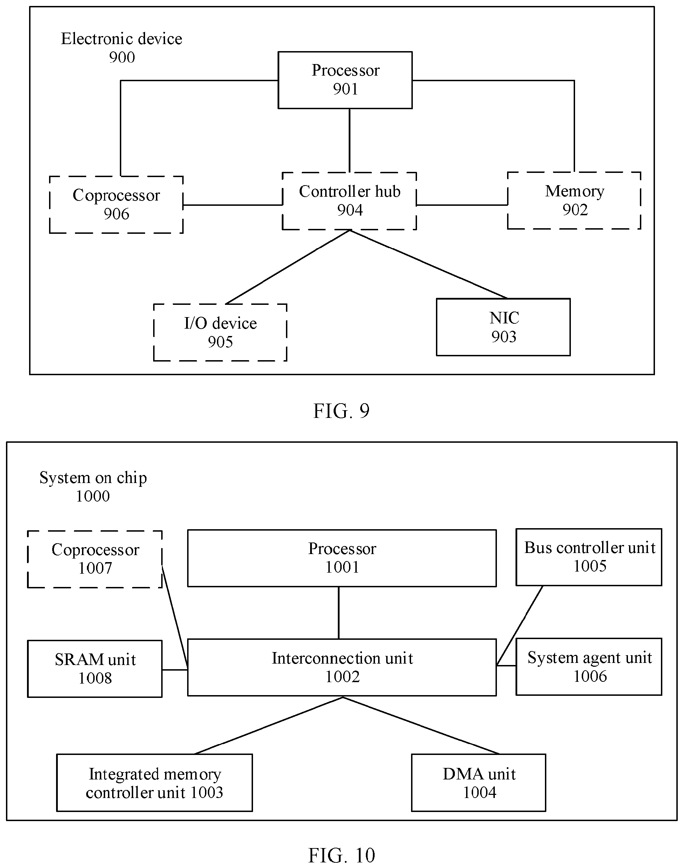

FIG. 9 is a schematic diagram of a structure of an electronic device 900 according to an implementation of this application. The electronic device 900 may include one or more processors 901 coupled to a controller hub 904. In at least one embodiment, the controller hub 904 communicates with the processor 901 through a multi-branch bus such as a front side bus (FSB), a point-to-point interface such as a quick path interconnect (QPI), or a similar connection. The processor 901 executes instructions for controlling a general type of data processing operation. In an embodiment, the controller hub 904 includes, but is not limited to, a graphics memory controller hub (GMCH) (not shown in the figure) and an input/output hub (IOH) (which may be on separate chips) (not shown in the figure). The GMCH includes a memory and a graphics controller, and is coupled to the IOH.

The electronic device 900 may further include a coprocessor 906 and a memory 902 that are coupled to the controller hub 904. Alternatively, one or both of the memory 902 and the GMCH may be integrated into the processor 901 (as described in this application). The memory 902 and the coprocessor 906 are directly coupled to the processor 901 and the controller hub 904. The controller hub 904 and the IOH are located in a single chip.

The memory 902 may be, for example, a dynamic random access memory (DRAM), a phase change memory (PCM), or a combination thereof.

In an embodiment, the coprocessor 906 is a dedicated processor, for example, a high throughput MIC processor, a network or communications processor, a compression engine, a graphics processor, a GPGPU, or an embedded processor. An optional property of the coprocessor 906 is shown in FIG. 9 in dashed lines.

In an embodiment, the electronic device 900 may further include a network interface (NIC) 903. The network interface 903 may include a transceiver, configured to provide a radio interface for the electronic device 900 to further communicate with any other suitable devices (such as a front-end module and an antenna). In various embodiments, the network interface 903 may be integrated with another component of the electronic device 900. The network interface 903 may implement a function of a communications unit in the foregoing embodiment.

The electronic device 900 may further include an input/output (I/O) device 905. The input/output (I/O) device 905 may include: a user interface through which a user can interact with the electronic device 900; a peripheral component interface through which a peripheral component can also interact with the electronic device 900; and/or a sensor, configured to determine an environmental condition and/or location information associated with electronic device 900.

It should be noted that FIG. 9 is merely an example. To be specific, although FIG. 9 shows that the electronic device 900 includes a plurality of components such as the processor 901, the controller hub 904, and the memory 902, in actual application, a device using the methods in this application may include only some of the components of the electronic device 900, for example, may include only the processor 901 and the NIC 903. Properties of optional devices in FIG. 9 are shown in dashed lines.

The memory of the electronic device 900 may include one or more tangible and non-transitory computer-readable storage media, configured to store data and/or instructions. The computer-readable storage medium stores instructions, and specifically, stores temporary and permanent copies of the instructions.

In this application, the electronic device 900 may be specifically the foregoing terminal device such as the mobile phone, the tablet computer, the personal digital assistant (Personal Digital Assistant, PDA), or the desktop computer. The instructions stored in the memory of the electronic device may include instructions that enable the electronic device to implement the foregoing process management method when being executed by at least one unit in the processor.

FIG. 10 is a schematic diagram of a structure of an SoC (System on Chip, system on chip) 1000 according to an implementation of this application. In FIG. 10, similar components have a same reference numeral. In addition, a dashed box is an optional feature of a more advanced SoC 1000. The SoC 1000 may be used in any electronic device according to this application, and may implement corresponding functions based on different devices in which the SoC 1000 is located and different instructions stored in the SoC 1000.

In FIG. 10, the SoC 1000 includes an interconnection unit 1002 coupled to a processor 1001, a system agent unit 1006, a bus controller unit 1005, an integrated memory controller unit 1003, a group of coprocessors 1007 or one or more coprocessors 1007 that may include integrated graphics logic, an image processor, an audio processor, and a video processor, an SRAM (static random access memory) unit 1008, and a DMA (direct memory access) unit 1004. In an embodiment, the coprocessor 1007 includes a dedicated processor, for example, a network or communications processor, a compression engine, a GPGPU, a high throughput MIC processor, or an embedded processor.

The SRAM unit 1008 may include one or more computer-readable storage media, configured to store data and/or instructions. The computer-readable storage medium may store instructions, and specifically, store temporary and permanent copies of the instructions. The instructions may include instructions that enable an electronic device to implement the foregoing process management method when being executed by at least one unit in the processor.

The embodiments of the mechanism disclosed in this application may be implemented in a manner such as software, hardware, firmware, or a combination of these implementation methods. The embodiments of this application may be implemented as a computer program or program code executed on a programmable system. The programmable program includes at least one processor and a memory (or a storage system, including volatile and non-volatile memories and/or a storage unit).

The program code may be applied to input the instructions to perform the functions described herein and generate output information. The output information may be applied to one or more output devices in a known manner. It may be understood that, in the embodiments of this application, a processing system may be a microprocessor, a digital signal processor (DSP), a microcontroller, an application-specific integrated circuit (ASIC), or the like, and/or any combination thereof. According to another aspect, the processor may be a single-core processor, a multi-core processor, or the like, and/or any combination thereof.

The program code may be implemented in a high-level programming language or an object-oriented programming language, to communicate with the processor. The program code may alternatively be implemented in an assembly language or a machine language when needed. Indeed, the mechanisms described in this application are not limited to the scope of any particular programming language. In any case, the language may be a compiled language or an interpretive language.

In some cases, the disclosed embodiments may be implemented by hardware, firmware, software, or any other combinations. The disclosed embodiments may be implemented as instructions carried by or stored on one or more transitory or non-transitory machine-readable (for example, computer-readable) storage media. The instructions may be read and executed by one or more processors. For example, the instructions are distributed over a network or through a pneumatic computer-readable medium. Therefore, the machine-readable medium may include any mechanism for storing or transmitting information in a machine (for example, a computer) readable form, including, but not limited to, a floppy disk, a compact disc, an optical disc, a compact disc read-only memory (CD-ROM), a magneto-optical disc, a read-only memory (ROM), a random access memory (RAM), an erasable programmable read-only memory (EPROM), an electrically erasable programmable read-only memory (EEPROM), a magnetic card or an optical card, a flash memory, or a tangible machine-readable memory for transmitting information (for example, a carrier-wave, infrared, and digital signal) by using the internet in an electrical, optical, acoustic, or other forms. Therefore, the machine-readable medium includes any type of machine-readable medium suitable for storing or transmitting electronic instructions or information in a machine-readable form.

One or more aspects of at least one embodiment may be implemented by using representative instructions stored on a computer-readable storage medium. The instructions represent various logic in a processor, and when the instructions are read by a machine, the mechanism is enabled to act on the logic for performing the technologies described herein. These representations referred to as "IP cores" may be stored on a tangible computer-readable storage medium and provided to a plurality of customers or production devices for implementation to be loaded into a manufacturing machine that actually manufactures the logic or the processor.

In some cases, an instruction converter may be configured to transfer instructions from a source instruction set to a target instruction set. For example, the instruction converter may convert, in a transform (for example, a static binary transform, or a dynamic binary transform including dynamic compilation), morphing, emulation, or another manner, the instructions into one or more other instructions processed by a core. The instruction converter may be implemented by using software, hardware, firmware, or another combination. The instruction converter may be located on the processor, outside the processor, or partially on the processor and partially outside the processor.

It should be noted that, as used herein, the term "module" may refer to an application-specific integrated circuit (ASIC), an electronic circuit, a (shared, dedicated, or group) processor that executes one or more pieces of software or firmware programs and/or a memory, a combinational logic circuit, and/or another appropriate hardware component that provides the described functions, or may be used as a part of these hardware components. In other words, all modules in the device embodiments of this application are logical modules. Physically, one logical module may be a physical unit, or may be a part of a physical unit, or may be implemented by using a combination of a plurality of physical units. In addition, the device embodiments of this application do not introduce a module that is not closely related to resolving the technical problem in this application. This does not indicate that no other module exists in the foregoing device embodiments.

It should be noted that the terms "first", "second", and the like are merely used for distinction and descriptions, but cannot be understood as indicating or implying relative importance.

It should be noted that, in the accompanying drawings, some structural or method features may be shown in a particular arrangement and/or order. However, it should be understood that such a particular arrangement and/or order may not be required. In some embodiments, these features may be arranged in a manner and/or order different from that shown in the descriptive accompanying drawings. In addition, inclusion of the structural or method features in a particular figure does not imply that such features are required in all embodiments, and in some embodiments, these features may not be included or may be combined with other features.

Although this application has been illustrated and described with reference to some implementations of this application, a person of ordinary skill in the art should understand that the foregoing content is used to further describe in detail this application with reference to specific implementations.

## Claims

1. A process management method, comprising:
when a Binder inter-process call is performed, determining whether a to-be-called process is a process in a suspended state; and
if the to-be-called process is a process in a suspended state, determining, according to a preset wake-up policy that is based on a communication type of the Binder inter-process call, whether to wake up the to-be-called process for process calling; or
if the to-be-called process is a process in a non-suspended state, calling the process,
wherein the determining, according to a preset wake-up policy that is based on a communication type of the Binder inter-process call, whether to wake up the to-be-called process for process calling comprises:
determining the communication type of the Binder inter-process call, wherein the communication type comprises a synchronous Binder call and an asynchronous Binder call; and
if the communication type of the Binder inter-process call is the synchronous Binder call, determining, based on a preset precedence type of the Binder inter-process call, whether to wake up the to-be-called process for the process calling;
if the communication type of the Binder inter-process call is the asynchronous Binder call, buffering the Binder inter-process call, and determining, based on whether an accumulation of buffered calls for the to-be-called process reaches a preset accumulation criterion or whether a status of the to-be-called process changes, whether to wake up the to-be-called process for the process calling.

2. The process management method according to claim 1, wherein the precedence type comprises ease-of-use precedence, and if the precedence type of the Binder inter-process call is the ease-of-use precedence, the to-be-called process is woken up for the process calling,
wherein the precedence type of the Binder inter-process call is the ease-of-use precedence if any one of the following conditions is met:
an application corresponding to the to-be-called process or a calling process that calls the to-be-called process is an application that is allowed to run in a background, as selected in a user interface;
an application corresponding to the to-be-called process or a calling process that calls the to-be-called process is an application whose power consumption impact is ignored, as selected in a user interface; or
an application corresponding to the to-be-called process or a calling process that calls the to-be-called process is an application whose memory impact is ignored, as selected in a user interface.

3. The process management method according to claim 1, wherein the precedence type comprises power consumption precedence which is that a process occupying as little power consumption as possible is preferably considered, and if the precedence type of the Binder inter-process call is the power consumption precedence, whether a calling process that calls the to-be-called process is a core process is determined, wherein if the calling process is a core process, the to-be-called process is woken up, or if the calling process is a non-core process, the to-be-called process is not woken up,
wherein the calling process is a core process if the calling process meets any one of the following conditions:
an application corresponding to the calling process is an application configured by using application whitelisting;
the calling process is a foreground process, and is being used by a user in a foreground;
in an operating system, an ADJ value of the calling process is less than an ADJ value of a foreground process;
in an operating system, the calling process is a process that is not in a background process scheduling group;
a UID of an application corresponding to the calling process is less than a preset UID;
the calling process is a process of a foreground service in an operating system; or
the calling process is a process that currently performs a perceivable background service.

4. The process management method according to claim 3, wherein if the calling process is a non-core process, the to-be-called process is not woken up, and the method further comprises: marking a status of the calling process as a suspended state, and/or marking a status of an application corresponding to the calling process as a suspended state.

5. The process management method according to claim 1, wherein the buffering the Binder inter-process call comprises: buffering a calling relationship for the to-be-called process into an asynchronous call buffer.

6. The process management method according to claim 5, wherein if the accumulation of the buffered calls for the to-be-called process reaches the preset accumulation criterion or if the status of the to-be-called process is switched from the suspended state to an active state, the to-be-called process is woken up.

7. The process management method according to claim 6, wherein that the accumulation of the buffered calls for the to-be-called process reaches the preset accumulation criterion comprises:
a total used storage of the asynchronous call buffer for the to-be-called process exceeds a preset storage threshold; or
an available storage space of the asynchronous call buffer for the to-be-called process is less than a preset storage space threshold; or
a quantity of buffered calling times for the to-be-called process reaches a preset threshold for a quantity of buffered calling times; or
buffered calling time for the to-be-called process reaches a preset buffered calling time threshold.

8. The process management method according to claim 1, wherein after the to-be-called process is woken up, the method further comprises: switching a status of the to-be-called process from the suspended state to an active state, and switching a status of an application corresponding to the to-be-called process from a suspended state to an active state.

9. The process management method according to any one of claims 1 to 8, wherein the determining whether a to-be-called process is a process in a suspended state comprises:
determining whether process identification information of the to-be-called process is in a preset management process list, wherein the management process list comprises process identification information of a process corresponding to an application in a suspended state, wherein
if the process identification information of the to-be-called process is in the management process list, the to-be-called process is a process in a suspended state; or if the process identification information of the to-be-called process is not in the management process list, the to-be-called process is a process in a non-suspended state.

10. The process management method according to claim 9, wherein the process identification information comprises a process ID and/or a UID of the application corresponding to the process.

11. The process management method according to claim 9, wherein the application in the suspended state comprises an application that has no perceivable service within a preset time period after entering the background.

12. An electronic device, comprising:
a memory, configured to store a computer program, wherein the computer program comprises program instructions; and
a processor, configured to execute the program instructions, to enable the electronic device to perform the process management method according to any one of claims 1 to 11.

## Patentansprüche

1. Prozessverwaltungsverfahren, umfassend:
wenn ein Binder-Interprozessaufruf durchgeführt wird, Bestimmen, ob sich der aufzurufende Prozess in einem ausgesetzten Zustand befindet; und
falls der aufzurufende Prozess ein Prozess in einem ausgesetzten Zustand ist, Bestimmen, ob der aufzurufende Prozess für das Prozessaufrufen aufzuwecken ist, gemäß einer voreingestellten Aufweckrichtlinie, die auf einem Kommunikationstyp des Binder-Interprozessaufrufs basiert; oder
falls der aufzurufende Prozess ein Prozess ist, der sich in einem nicht ausgesetzten Zustand befindet, Aufrufen des Prozesses,
wobei das Bestimmen, ob der aufzurufende Prozess für das Prozessaufrufen aufzuwecken ist, gemäß einer voreingestellten Aufweckrichtlinie, die auf einem Kommunikationstyp des Binder-Interprozessaufrufs basiert, Folgendes umfasst:
Bestimmen des Kommunikationstyps des Binder-Interprozessaufrufs, wobei der Kommunikationstyp einen synchronen Binder-Aufruf und einen asynchronen Binder-Aufruf umfasst; und
falls der Kommunikationstyp des Binder-Interprozessaufrufs der synchrone Binder-Aufruf ist, Bestimmen, basierend auf einem voreingestellten Vorrangtyp des Binder-Interprozessaufrufs, ob der aufzurufende Prozess für das Prozessaufrufen aufzuwecken ist;
falls der Kommunikationstyp des Binder-Interprozessaufrufs der asynchrone Binder-Aufruf ist, Puffern des Binder-Interprozessaufrufs und Bestimmen, basierend darauf, ob eine Akkumulation von gepufferten Aufrufen für den aufzurufenden Prozess ein voreingestelltes Akkumulationskriterium erreicht oder ob sich ein Status des aufzurufenden Prozesses ändert, ob der aufzurufende Prozess für das Prozessaufrufen aufzuwecken ist.

2. Prozessverwaltungsverfahren nach Anspruch 1, wobei der Vorrangtyp einen Bedienkomfortvorrang umfasst und, falls der Vorrangtyp des Binder-Interprozessaufrufs der Bedienkomfortvorrang ist, der aufzurufende Prozess für das Prozessaufrufen aufgeweckt wird,
wobei der Vorrangtyp des Binder-Interprozessaufrufs der Bedienkomfortvorrang ist, falls eine der folgenden Bedingungen erfüllt ist:
eine Anwendung, die dem aufzurufenden Prozess oder einem aufrufenden Prozess, der den aufzurufenden Prozess aufruft, entspricht, ist eine Anwendung, die, wie in einer Benutzerschnittstelle ausgewählt, in einem Hintergrund laufen darf;
eine Anwendung, die dem aufzurufenden Prozess oder einem aufrufenden Prozess, der den aufzurufenden Prozess aufruft, entspricht, ist eine Anwendung, deren Auswirkung auf den Leistungsverbrauch ignoriert wird, wie in einer Benutzerschnittstelle ausgewählt; oder
eine Anwendung, die dem aufzurufenden Prozess oder einem aufrufenden Prozess, der den aufzurufenden Prozess aufruft, entspricht, ist eine Anwendung, deren Auswirkung auf den Speicher ignoriert wird, wie in einer Benutzerschnittstelle ausgewählt.

3. Prozessverwaltungsverfahren nach Anspruch 1, wobei der Vorrangtyp einen Leistungsverbrauchsvorrang umfasst, der darin besteht, dass ein Prozess, der so wenig Leistungsverbrauch wie möglich belegt, bevorzugt berücksichtigt wird, und, falls der Vorrangtyp des Binder-Interprozessaufrufs der Leistungsverbrauchsvorrang ist, bestimmt wird, ob ein aufrufender Prozess, der den aufzurufenden Prozess aufruft, ein Kernprozess ist, wobei, falls der aufrufende Prozess ein Kernprozess ist, der aufzurufende Prozess aufgeweckt wird oder, falls der aufrufende Prozess ein Nicht-Kernprozess ist, der aufzurufende Prozess nicht aufgeweckt wird,
wobei der aufrufende Prozess ein Kernprozess ist, falls der aufrufende Prozess eine der folgenden Bedingungen erfüllt:
eine dem aufrufenden Prozess entsprechende Anwendung ist eine Anwendung, die mittels Anwendungs-Whitelisting konfiguriert ist;
der aufrufende Prozess ist ein Vordergrundprozess und wird durch einen Benutzer in einem Vordergrund verwendet;
in einem Betriebssystem ist ein ADJ-Wert des aufrufenden Prozesses kleiner als ein ADJ-Wert eines Vordergrundprozesses; in einem Betriebssystem ist der aufrufende Prozess ein Prozess, der sich nicht in einer Hintergrundprozessplanungsgruppe befindet;
eine UID einer Anwendung, die dem aufrufenden Prozess entspricht, ist kleiner ist als eine voreingestellte UID;
der aufrufende Prozess ist ein Prozess eines Vordergrunddienstes in einem Betriebssystem; oder
der aufrufende Prozess ist ein Prozess, der aktuell einen wahrnehmbaren Hintergrunddienst durchführt.

4. Prozessverwaltungsverfahren nach Anspruch 3, wobei, falls der aufrufende Prozess ein Nicht-Kernprozess ist, der aufzurufende Prozess nicht aufgeweckt wird, und das Verfahren ferner Folgendes umfasst: Markieren eines Status des aufrufenden Prozesses als einen ausgesetzten Zustand und/oder Markieren eines Status einer dem aufrufenden Prozess entsprechenden Anwendung als einen ausgesetzten Zustand.

5. Prozessverwaltungsverfahren nach Anspruch 1, wobei das Puffern des Binder-Interprozessaufrufs Folgendes umfasst: Puffern einer Aufrufbeziehung für den aufzurufenden Prozess in einen asynchronen Aufrufpuffer.

6. Prozessverwaltungsverfahren nach Anspruch 5, wobei der aufzurufende Prozess aufgeweckt wird, falls die Akkumulation der gepufferten Aufrufe für den aufzurufenden Prozess das voreingestellte Akkumulationskriterium erreicht oder falls der Status des aufzurufenden Prozesses von dem ausgesetzten Zustand in einen aktiven Zustand wechselt.

7. Prozessverwaltungsverfahren nach Anspruch 6, wobei, dass die Akkumulation der gepufferten Aufrufe für den aufzurufenden Prozess das voreingestellte Akkumulationskriterium erreicht, Folgendes umfasst:
ein gesamter belegter Speicher des asynchronen Aufrufpuffers für den aufzurufenden Prozess überschreitet einen voreingestellten Speicherschwellenwert; oder
ein verfügbarer Speicherplatz des asynchronen Aufrufpuffers für den aufzurufenden Prozess ist kleiner als ein voreingestellter Speicherplatzschwellenwert; oder
eine Menge gepufferter Aufrufzeiten für den aufzurufenden Prozess erreicht einen voreingestellten Schwellenwert für eine Menge gepufferter Aufrufzeiten; oder
die gepufferte Aufrufzeit für den aufzurufenden Prozess erreicht einen voreingestellten Schwellenwert für die gepufferte Aufrufzeit.

8. Prozessverwaltungsverfahren nach Anspruch 1, wobei das Verfahren nach dem Aufwecken des aufzurufenden Prozesses ferner Folgendes umfasst: Wechseln eines Status des aufzurufenden Prozesses von dem ausgesetzten Zustand in einen aktiven Zustand und Wechseln eines Status einer dem aufzurufenden Prozess entsprechenden Anwendung von einem ausgesetzten Zustand in einen aktiven Zustand.

9. Prozessverwaltungsverfahren nach einem der Ansprüche 1 bis 8, wobei das Bestimmen, ob ein aufzurufender Prozess ein Prozess in einem ausgesetzten Zustand ist, Folgendes umfasst:
Bestimmen, ob Prozessidentifikationsinformationen des aufzurufenden Prozesses in einer voreingestellten Verwaltungsprozessliste enthalten sind, wobei die Verwaltungsprozessliste Prozessidentifikationsinformationen eines Prozesses umfasst, der einer Anwendung in einem ausgesetzten Zustand entspricht, wobei
falls die Prozessidentifizierungsinformationen des aufzurufenden Prozesses in der Verwaltungsprozessliste enthalten sind, der aufzurufende Prozess ein Prozess in einem ausgesetzten Zustand ist; oder falls die Prozessidentifizierungsinformationen des aufzurufenden Prozesses nicht in der Verwaltungsprozessliste enthalten sind, der aufzurufende Prozess ein Prozess in einem nicht ausgesetzten Zustand ist.

10. Prozessverwaltungsverfahren nach Anspruch 9, wobei die Prozessidentifikationsinformationen eine Prozess-ID und/oder eine UID der dem Prozess entsprechenden Anwendung umfassen.

11. Prozessverwaltungsverfahren nach Anspruch 9, wobei die Anwendung in dem ausgesetzten Zustand eine Anwendung umfasst, die innerhalb eines voreingestellten Zeitraums nach dem Eintreten in den Hintergrund keinen wahrnehmbaren Dienst aufweist.

12. Elektronische Einrichtung, umfassend:
einen Speicher, der dazu konfiguriert ist, ein Computerprogramm zu speichern, wobei das Computerprogramm Programmanweisungen umfasst; und
einen Prozessor, der dazu konfiguriert ist, die Programmanweisungen auszuführen, um die elektronische Einrichtung in die Lage zu versetzen, das Prozessverwaltungsverfahren nach einem der Ansprüche 1 bis 11 durchzuführen.

## Revendications

1. Procédé de gestion de processus, comprenant :
lors de la réalisation d'un appel interprocessus Binder, le fait de déterminer si un processus à appeler est un processus dans un état suspendu ; et
si le processus à appeler est un processus dans un état suspendu, le fait de déterminer, selon une politique de réveil prédéfinie qui est basée sur un type de communication de l'appel interprocessus Binder, s'il faut réveiller le processus à appeler pour l'appel de processus ; ou
si le processus à appeler est un processus dans un état non suspendu, l'appel du processus,
dans lequel le fait de déterminer, selon une politique de réveil prédéfinie qui est basée sur un type de communication de l'appel interprocessus Binder, s'il convient de réveiller le processus à appeler pour l'appel de processus comprend :
la détermination du type de communication de l'appel interprocessus Binder, dans lequel le type de communication comprend un appel Binder synchrone et un appel Binder asynchrone ; et
si le type de communication de l'appel interprocessus Binder est l'appel Binder synchrone, le fait de déterminer, sur la base d'un type de priorité prédéfini de l'appel interprocessus Binder, s'il convient de réveiller le processus à appeler pour l'appel de processus ;
si le type de communication de l'appel interprocessus Binder est l'appel Binder asynchrone, la mise en mémoire tampon de l'appel interprocessus Binder, et le fait de déterminer, sur la base de si une accumulation d'appels mis en mémoire tampon pour le processus à appeler atteint un critère d'accumulation prédéfini ou si un statut du processus à appeler change, s'il convient de réveiller le processus à appeler pour l'appel de processus.

2. Procédé de gestion de processus selon la revendication 1, dans lequel le type de priorité comprend une priorité de facilité d'utilisation, et si le type de priorité de l'appel interprocessus Binder est la priorité de facilité d'utilisation, le processus à appeler est réveillé pour l'appel de processus, dans lequel le type de priorité de l'appel interprocessus Binder est la priorité de facilité d'utilisation si l'une quelconque des conditions suivantes est remplie :
une application correspondant au processus à appeler ou à un processus appelant qui appelle le processus à appeler est une application qui est autorisée à fonctionner en arrière-plan, comme sélectionné dans une interface utilisateur ;
une application correspondant au processus à appeler ou un processus appelant qui appelle le processus à appeler est une application dont l'impact sur la consommation d'énergie est ignoré, comme sélectionné dans une interface utilisateur ; ou
une application correspondant au processus à appeler ou un processus appelant qui appelle le processus à appeler est une application dont l'impact sur la mémoire est ignoré, comme sélectionné dans une interface utilisateur.

3. Procédé de gestion de processus selon la revendication 1, dans lequel le type de priorité comprend une priorité de consommation d'énergie qui est qu'un processus occupant le moins de consommation d'énergie possible est considéré de préférence, et si le type de priorité de l'appel interprocessus Binder est la priorité de consommation d'énergie, il est déterminé si un processus appelant qui appelle le processus à appeler est un processus principal, dans lequel si le processus appelant est un processus principal, le processus à appeler est réveillé, ou si le processus appelant est un processus non principal, le processus à appeler n'est pas réveillé,
dans lequel le processus appelant est un processus principal si le processus appelant remplit l'une quelconque des conditions suivantes :
une application correspondant au processus appelant est une application configurée à l'aide d'une liste blanche d'applications ;
le processus appelant est un processus de premier plan, et est utilisé par un utilisateur dans un premier plan ;
dans un système d'exploitation, une valeur ADJ du processus appelant est inférieure à une valeur ADJ d'un processus de premier plan ;
dans un système d'exploitation, le processus appelant est un processus qui n'est pas dans un groupe de planification de processus en arrière-plan ;
un UID d'une application correspondant au processus appelant est inférieur à un UID prédéfini ;
le processus appelant est un processus d'un service de premier plan dans un système d'exploitation ; ou
le processus appelant est un processus qui réalise actuellement un service en arrière-plan perceptible.

4. Procédé de gestion de processus selon la revendication 3, dans lequel si le processus appelant est un processus non principal, le processus à appeler n'est pas réveillé, et le procédé comprend en outre : le marquage d'un statut du processus appelant comme état suspendu, et/ou le marquage d'un statut d'une application correspondant au processus appelant comme état suspendu.

5. Procédé de gestion de processus selon la revendication 1, dans lequel la mise en mémoire tampon de l'appel interprocessus Binder comprend : la mise en mémoire tampon d'une relation d'appel pour le processus à appeler dans une mémoire tampon d'appel asynchrone.

6. Procédé de gestion de processus selon la revendication 5, dans lequel si l'accumulation des appels mis en mémoire tampon pour le processus à appeler atteint le critère d'accumulation prédéfini ou si le statut du processus à appeler passe de l'état suspendu à un état actif, le processus à appeler est réveillé.

7. Procédé de gestion de processus selon la revendication 6, dans lequel le fait que l'accumulation des appels mis en mémoire tampon pour le processus à appeler atteint le critère d'accumulation prédéfini comprend :
un stockage utilisé total du tampon d'appel asynchrone pour le processus à appeler dépasse un seuil de stockage prédéfini ; ou
un espace de stockage disponible du tampon d'appel asynchrone pour le processus à appeler est inférieur à un seuil d'espace de stockage prédéfini ; ou
une quantité de temps d'appel mis en mémoire tampon pour le processus à appeler atteint un seuil prédéfini pour une quantité de temps d'appel mis en mémoire tampon ; ou
le temps d'appel mis en mémoire tampon pour le processus à appeler atteint un seuil de temps d'appel mis en mémoire tampon prédéfini.

8. Procédé de gestion de processus selon la revendication 1, dans lequel après le réveil du processus à appeler, le procédé comprend en outre : le passage d'un statut du processus à appeler de l'état suspendu à un état actif, et le passage d'un statut d'une application correspondant au processus à appeler d'un état suspendu à un état actif.

9. Procédé de gestion de processus selon l'une quelconque des revendications 1 à 8, dans lequel le fait de déterminer si un processus à appeler est un processus dans un état suspendu comprend :
le fait de déterminer si les informations d'identification de processus du processus à appeler sont dans une liste de processus de gestion prédéfinie, dans lequel la liste de processus de gestion comprend les informations d'identification de processus d'un processus correspondant à une application dans un état suspendu, dans lequel
si les informations d'identification de processus du processus à appeler sont dans la liste de processus de gestion, le processus à appeler est un processus dans un état suspendu ; ou si les informations d'identification de processus du processus à appeler ne sont pas dans la liste de processus de gestion, le processus à appeler est un processus dans un état non suspendu.

10. Procédé de gestion de processus selon la revendication 9, dans lequel les informations d'identification de processus comprennent un ID de processus et/ou un UID de l'application correspondant au processus.

11. Procédé de gestion de processus selon la revendication 9, dans lequel l'application à l'état suspendu comprend une application qui n'a aucun service perceptible dans un délai prédéfini après son passage en arrière-plan.

12. Dispositif électronique, comprenant :
une mémoire, configurée pour stocker un programme informatique, dans lequel le programme informatique comprend des instructions de programme ; et
un processeur, configuré pour exécuter les instructions de programme, pour permettre au dispositif électronique de réaliser le procédé de gestion de processus selon l'une quelconque des revendications 1 à 11.
